# EUROPÄISCHE PATENTSCHRIFT

(11) **EP 3 479 455 B1**
(45) Veröffentlichungstag und Bekanntmachung des Hinweises auf die Patenterteilung: **05.08.2020**
(21) Anmeldenummer: 17729356.0
(22) Anmeldetag: 09.06.2017
(51) Int. Cl.: H02J 7/00

(54) **ENERGIESPEICHEREINRICHTUNG FÜR EINEN KRAFTWAGEN**
ENERGY STORAGE DEVICE FOR A MOTOR VEHICLE
DISPOSITIF À ACCUMULATEURS D'ÉNERGIE POUR VÉHICULE AUTOMOBILE

(30) Priorität: 01.07.2016 DE 102016008052
(43) Veröffentlichungstag der Anmeldung: 08.05.2019
(73) Patentinhaber: Daimler AG, 70372 Stuttgart (DE)
(72) Erfinder: DOERSAM, Thomas, 70499 Stuttgart (DE); EICHINGER, Andreas, 72119 Ammerbuch (DE); FALSETT, Rainer, 64832 Babenhausen (DE); HACHTEL, Heiko, 71701 Schwieberdingen (DE); HERB, Frieder, 73230 Kirchheim (DE); LEHMANN, Oliver, 70182 Stuttgart (DE); OHMS, Christian, 71139 Ehningen (DE)
(74) Vertreter: JENSEN & SON
(86) Internationale Anmeldenummer: PCT/EP2017/000676
(87) Internationale Veröffentlichungsnummer: WO 2018/001544

(56) Entgegenhaltungen:
- EP-A1- 2 897 247
- EP-A2- 3 358 701
- DE-A1-102014 004 790

## Beschreibung

Die Erfindung betrifft eine Energiespeichereinrichtung für einen Kraftwagen gemäß dem Oberbegriff von Patentanspruch 1.

In modernen Kraftwagen kommt oftmals eine Energiespeichereinrichtung oder eine Batterieanordnung zum Einsatz, welche mit einer höheren Spannung als die konventionellen 12 oder 24 Volt betrieben werden. Gerade bei Kraftwagen, welche auch über einen elektrischen Antriebsmotor verfügen, können Spannungen von mehreren 100 Volt als Nenn- oder Betriebsspannung vorgesehen sein. Derartige Energiespeichereinrichtungen werden typischerweise von einer kraftwagenexternen Ladeeinrichtung, welche Teil einer Ladeinfrastruktur ist, geladen. Ist nun ein Kraftwagen auf eine höhere Spannung ausgelegt beziehungsweise weist eine Energiespeichereinrichtung mit einer höheren Nominalspannung auf, als die Ladeinfrastruktur sie bereitstellt, kann die Energiespeichereinrichtung beziehungsweise die Batterieanordnung nicht ohne Weiteres durch die Ladeinfrastruktur geladen werden. Üblicherweise wird dieses Problem durch eine leistungselektronische Schaltung gelöst, welche groß, teuer und schwer ist.

In diesem Zusammenhang offenbart die DE 10 2015 006 208 A1 ein theoretisches Konzept, mittels welchem eine Ladekonfiguration für eine Batterieanordnung an einem Ladeanschluss ein Verdoppeln oder Halbieren der Nominalspannung der Batterieanordnung ermöglicht.

Des Weiteren offenbart die DE 10 2014 004790 A1 ein Verfahren zum Betrieb einer Energiespeichereinrichtung mit wenigstens einem ersten Energiespeicherelement und wenigstens einem parallel zum ersten Energiespeicherelement geschalteten zweiten Energiespeicherelement in einem Kraftfahrzeug. Durch eine Umschalteinrichtung kann zum Laden der Energiespeichereinrichtung durch eine fahrzeugexterne Energiequelle das erste und das zweite Energiespeicherelement in Serie geschaltet werden.

In der EP 2 897 247 A1 wird eine Vorrichtung zum Batteriemanagement beschrieben, anhand derer auch die einzelnen Batteriemodule ja nach Bedarf seriell oder parallel geschaltet werden können.

Es stellt sich die Aufgabe, eine Batterieanordnung oder Energiespeichereinrichtung in einem Kraftwagen bereitzustellen, mit der das beschriebene Problem auf effiziente Weise gelöst wird und insbesondere einschlägige Sicherheitsvorschriften für den Betrieb einer Energiespeichereinrichtung in einem Kraftwagen erfüllt werden.

Diese Aufgabe wird durch den Gegenstand der unabhängigen Patentansprüche gelöst. Vorteilhafte Ausführungsformen ergeben sich aus den abhängigen Patentansprüchen, der Beschreibung und den Figuren.

Die Erfindung betrifft eine Energiespeichereinrichtung oder eine Batterieanordnung für einen Kraftwagen. Die Energiespeichereinrichtung weist einen ersten und einen zweiten Energiespeicher zum Speichern elektrischer Energie auf. Sie kann auch mehr als zwei Energiespeicher aufweisen. Die Energiespeicher können beispielsweise Batterien oder Kondensatoren umfassen. Die Energiespeicher können dabei ein gemeinsames Gehäuse aufweisen. Die Energiespeicher oder Teilbatterien können dabei eine gleiche Spannung und/oder eine gleiche maximale Energiemenge oder -kapazität bereitstellen. Die Energiespeichereinrichtung kann somit als eine umschaltbare und/oder teilbare Energiespeichereinrichtung bezeichnet werden. Die Energiespeichereinrichtung weist außerdem zwei Anschlüsse auf, einen Ladeanschluss zum Laden der Energiespeicher über eine kraftwagenexterne Ladeinfrastruktur, sowie einen Betriebsanschluss zum Anschließen und Betrieb eines kraftwageninternen Verbrauchers oder Generators an der Energiespeichereinrichtung. Überdies weist die Energiespeichereinrichtung eine Schalteinrichtung auf, die mehrere, also beispielsweise drei, fünf oder sieben Schaltelemente aufweist, und mittels welcher die Energiespeicher wahlweise in Serie oder parallel schaltbar sind. Bei den Schaltelementen kann es sich um einfache Schalter handeln, mittels welchen eine elektrische Leitung zwischen zwei Anschlüssen herstellbar oder trennbar ist. Das kann beispielsweise durch eine vollständige Trennung oder eine vollständige Kopplung (digitales "0-1-Prinzip") realisiert sein.

Wesentlich ist hier, dass ein Schaltelement, welches im Folgenden als fünftes Schaltelement bezeichnet wird, der Schalteinrichtung dauerhaft mit den elektrischen Polen entgegengesetzter Polarität von den Energiespeichern elektrisch gekoppelt ist. Das fünfte Schaltelement dient somit der elektrischen Kopplung von Plus- und Minuspol beziehungsweise Minus- und Pluspol der beiden Energiespeicher und ihrem Schalten in Serie. Mit dem fünften Schaltelement sind die Energiespeicher unabhängig von den weiteren Schaltelementen der Schalteinrichtung oder von einem Schaltzustand der weiteren Schaltelemente der Schalteinrichtung in Serie schaltbar.

Das hat den Vorteil, dass die beiden Energiespeicher mit geringem Aufwand in Serie oder parallel geschaltet werden können. Überdies kann die Schalteinrichtung in einem Gehäuse mit der Energiespeichereinrichtung realisiert werden, so dass die Steuerung der Schaltelemente kompakt im Kraftwagen realisiert ist. Da das fünfte Schaltelement keine weiteren Funktionen hat, insbesondere nicht für eine vorschriftsmäßige allpolige Trennung der Energiespeichereinrichtung bzw. der Energiespeicher dient, kann es auch als Halbleiterschaltelement, beispielsweise als Diode oder Transistor realisiert werden, ohne entsprechende einschlägige Sicherheitsvorschriften für Hochvoltbatterien, welche eine allpolige Spannungsabschaltung von Energiespeichern in einem Kraftfahrzeug vorschreiben, zu erfüllen. Unter einer Hochvoltbatterie kann hier eine Batterie mit mehr als 60V Nominalspannung verstanden werden.

Somit wird durch das fünfte Schaltelement ermöglicht, dass durch die Schalteinrichtung die Energiespeichereinrichtung in vier unterschiedliche Betriebszustände gebracht wird und ein Laden an einer Infrastruktur mit geringerer Spannung realisiert werden kann. Die vier möglichen Betriebszustände betreffen dabei einen ersten Betriebszustand zum Fahren bei einer normalen Batteriespannung, die den in Serie geschalteten Energiespeichereinrichtungen entspricht, einen zweiten Betriebszustand für ein Laden bei einer halben Batteriespannung, also einer Batteriespannung, welcher bei spannungsgleichen Energiespeichern einem der beiden Energiespeicher und somit den parallel geschalteten Energiespeichern entspricht, einen dritten Betriebszustand für ein Laden bei der normalen Batteriespannung, und einen vierten Betriebszustand mit einer allpoligen Spannungsabschaltung und Trennung der Energiespeicher von Ladeanschluss-und/oder Betriebsanschluss.

Auch ist erfindungsgemäß vorgesehen, dass mittels eines mit dem Pluspol des zweiten Energiespeichers gekoppelten ersten Schaltelements der Pluspol des zweiten
Energiespeichers elektrisch von dem Betriebsanschluss entkoppelbar ist und in manchen erfinderischen Ausführungen auch von dem Ladeanschluss entkoppelbar ist.

Erfindungsgemäß ist in der Ausführungsform vorgesehen, dass mittels eines mit dem Minuspol des ersten Energiespeichers gekoppelten zweiten Schaltelements der Minuspol des ersten Energiespeichers elektrisch von dem Betriebsanschluss entkoppelbar ist und in manchen erfinderischen Ausführungen auch von dem Ladeanschluss entkoppelbar ist.

Des Weiteren ist erfindungsgemäß vorgesehen, dass mittels eines dritten Schaltelements ein Pluspol des Ladeanschlusses elektrisch von den Pluspolen der Energiespeicher entkoppelbar ist und mittels eines vierten Schaltelements ein Minuspol des Ladeanschlusses elektrisch von den Minuspolen der Energiespeicher entkoppelbar ist, wobei drittes und/oder viertes Schaltelement insbesondere als Batterie- und/oder Ladeschütze ausgeführt sind.

Das hat den Vorteil, dass die Batterie- beziehungsweise Ladeschütze nicht nur für ihre herkömmliche Funktion genutzt werden, sondern in die für die unterschiedlichen Betriebszustände erforderliche Verschaltung mit einbezogen werden, was die Anzahl der Bauteile gering hält. Überdies werden so keine zusätzlichen Ladeschützen zum Gleichstromladen über den Ladeanschluss benötigt.

In einer vorteilhaften Ausführungsform ist vorgesehen, dass mittels eines mit dem Pluspol des ersten Energiespeichers gekoppelten sechsten Schaltelements der Pluspol des ersten Energiespeichers elektrisch von dem Betriebsanschluss und von dem Ladeanschluss entkoppelbar ist.

In einer weiteren bevorzugten Ausführungsform ist vorgesehen, dass mittels eines mit dem Minuspol des zweiten Energiespeichers gekoppelten siebten Schaltelements der Minuspol des zweiten Energiespeichers elektrisch von dem Betriebsanschluss und auch von dem Ladenanschluss entkoppelbar ist.

Im Rahmen dieser Erfindung wurde zur besseren Lesbarkeit der Pol einer ersten Polarität als Minuspol bezeichnet und der Pol einer zweiten elektrischen Polarität eines Energiespeichers als Pluspol. Da dies eine bloße Konvention ist, kann der Minuspol im Rahmen dieser Offenbarung auch Pole einer elektrischen Polarität betreffen, welche in anderen Dokumenten als Pluspole bezeichnet sind. Entscheidend ist, dass der Minuspol im Rahmen dieser Erfindung einen ersten Pol und der Pluspol einen zweiten Pol mit entgegengesetzter Polarität betrifft.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert. Dabei zeigen:
- Fig. 1: ein Schaltbild einer ersten beispielhaften Ausführungsform einer Energiespeichereinrichtung;
- Fig. 2: ein Schaltbild einer zweiten beispielhaften Ausführungsform einer Energiespeichereinrichtung; und
- Fig. 3: ein Schaltbild einer dritten beispielhaften Ausführungsform einer Energiespeichereinrichtung.

In den Figuren werden dabei gleiche oder funktionsgleiche Elemente mit den gleichen Bezugszeichen versehen.

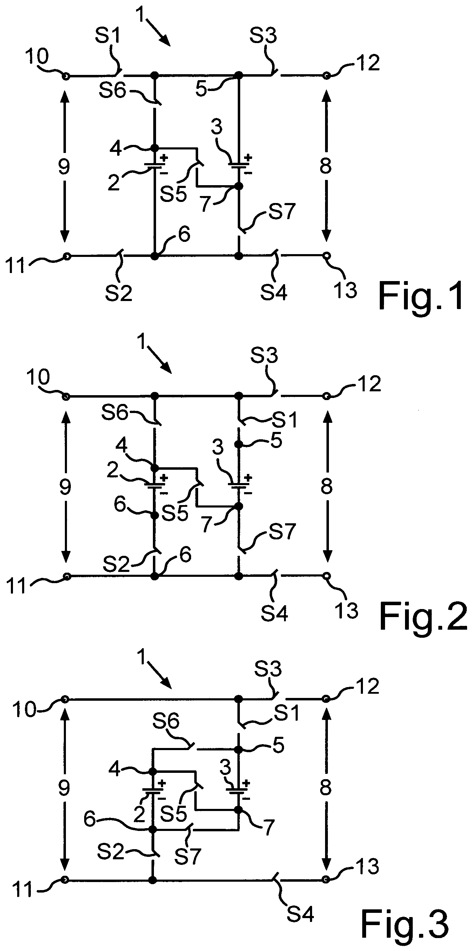

Fig. 1 zeigt das Schaltbild einer Energiespeichereinrichtung 1 für einen Kraftwagen mit einem ersten Energiespeicher 2 und einem zweiten Energiespeicher 3 mit einem ersten Pluspol 4 des ersten Energiespeichers 2 und einem zweiten Pluspol 5 des zweiten Energiespeichers 3 sowie einem ersten Minuspol 6 des ersten Energiespeichers 2 und einem zweiten Minuspol 7 des zweiten Energiespeichers 3. Des Weiteren weist die Energiespeichereinrichtung 1 noch einen Ladeanschluss 8 zum Laden der Energiespeicher 2, 3 sowie einen Betriebsanschluss 9 zum Versorgen von einem oder mehreren Verbrauchern durch die Energiespeichereinrichtung 1 auf. Überdies umfasst die Energiespeichereinrichtung 1 hier eine Schalteinrichtung, die mehrere, im gezeigten Beispiel sieben Schaltelemente S1 bis S7 umfasst. Mittels dieser Schaltelemente S1 bis S7 sind die Energiespeicher 2, 3 wahlweise in Serie und parallel schaltbar. Bei den Schaltelementen handelt es sich im gezeigten Beispiel um einfache Schalter, welche eine elektrische Verbindung nach dem digitalen Prinzip entweder ein- oder ausschalten können.

Im gezeigten Beispiel ist nun das fünfte Schaltelement S5 dauerhaft mit dem ersten Pluspol 4 und dem zweiten Minuspol 7 gekoppelt. Es könnte auch genauso umgekehrt mit dem ersten Minuspol 6 und dem zweiten Pluspol 5 elektrisch gekoppelt sein, dann würde eine gleiche Wirkung der Schalteinrichtung beziehungsweise der Energiespeichereinrichtung bewirkt, indem auch für die im Folgenden genannten Verschaltungen jeweils Plus- und Minuspole vertauscht werden müssten. Aus Gründen der besseren Lesbarkeit wird hier darauf verzichtet, wesentlich ist, dass das fünfte Schaltelement S5 mit den elektrischen Polen entgegengesetzter Polarität der beiden Energiespeicher 2, 3 gekoppelt ist und mit dem fünften Schaltelement S5 die Energiespeicher 2, 3 unabhängig von den weiteren Schaltelementen S1 bis S4 und S6, S7 beziehungsweise einem Zustand Derselben in Serie schaltbar sind. Selbstverständlich erfolgt dies derart, dass Kurzschlüsse vermieden werden. Dies kann beispielsweise in einer Steuerelektronik der Schalteinrichtung realisiert sein beziehungsweise berücksichtigt werden.

Mittels des fünften Schaltelements S5 wird somit eine Serienschaltung der beiden Energiespeicher 2, 3 oder Teilbatterien ermöglicht. Da das Schaltelement S5 nicht für die Freischaltung zuständig ist, und somit nicht für eine allpolige Abschaltung oder Entkopplung der Energiespeicher 2, 3 von Lade- und/oder Betriebsanschluss 8, 9, kann das fünfte Schaltelement S5 auch als Halbleiterbauteil ausgeführt werden, ohne dabei einschlägige Vorschriften bezüglich der Sicherheit in Hochvoltbatterien zu verletzen.

Im gezeigten Beispiel ist nun das erste Schaltelement S1 elektrisch zwischen den Pluspolen 4, 5 der Energiespeicher 2, 3 und dem Pluspol 10 des Betriebsanschlusses angeordnet. Das zweite Schaltelement S2 ist hier elektrisch zwischen den Minuspolen 6, 7 der Energiespeicher 2, 3 und dem Minuspol 11 des Betriebsanschlusses 9 angeordnet. Die beiden Schaltelemente S1, S2 können somit genutzt werden, um den Betriebsanschluss 9 vollständig, also allpolig von den Energiespeichern 2, 3 abzutrennen.

Das dritte Schaltelement S3 ist vorliegend zwischen den elektrischen Pluspolen 4, 5 der Energiespeicher 2, 3 und dem Pluspol 12 des Ladeanschlusses 8 angeordnet. Das vierte Schaltelement S4 ist entsprechend zwischen den Minuspolen 6, 7 der Energiespeicher 2, 3 und einem Minuspol 13 des Ladeanschlusses 8 angeordnet. Die beiden Schaltelemente S3, S4 können so genutzt werden, um den Ladeanschluss 8 von den Energiespeichern 2, 3 zu entkoppeln und diesen so allpolig abzuschalten. Das dritte und das vierte Schaltelement S3, S4 können gleichzeitig als Ladeschütze fungieren.

Vorliegend ist nun das sechste Schaltelement S6 elektrisch zwischen dem ersten elektrischen Pluspol 4 einerseits und dem ersten Schaltelement S1 sowie dem zweiten Pluspol 5 andererseits angeordnet. Analog dazu ist das siebte Schaltelement S7 zwischen dem zweiten elektrischen Minuspol 7 einerseits und dem ersten elektrischen Minuspol 6 sowie dem vierten Schaltelement S4 andererseits angeordnet. Mittels des sechsten und des siebten Schaltelements S6, S7 wird so eine Parallelschaltung der beiden Energiespeicher 2, 3, die beispielsweise jeweils Teilbatterien sein können, ermöglicht. Da die beiden Schaltelemente S6 und S7 nicht für die Freischaltung, also die Kopplung der Energiespeicher 2, 3 mit Lade- oder Betriebsanschluss 8, 9 zuständig sind, und entsprechend nicht den einschlägigen Sicherheitsanforderungen für eine allpolige Trennung genügen müssen, können sie beispielsweise auch als Halbleiterschaltelement, zum Beispiel als Transistor oder als Diode, ausgeführt sein.

Ein erster Betriebszustand, zum Beispiel ein normaler Fahrbetrieb, in welchem die Energiespeicher 2, 3 in Serie geschaltet sind, kann nun erzielt werden, indem die Schaltelemente S1, S2 und S5 geschlossen sind, die Schaltelemente S3, S4, S6 und S7 jedoch offen sind. Ein zweiter Betriebszustand, zum Beispiel zum Laden bei halber Batteriespannung, in welchem die Energiespeicher 2, 3 parallel geschaltet sind, und in welchem der Betriebsanschluss zugeschaltet, also mit den Energiespeichern 2, 3 elektrisch gekoppelt ist, kann hier erreicht werden, indem die Schaltelemente S1 bis S4 geschlossen sind, das Schaltelement S5 offen ist und die Schaltelemente S6 und S7 wiederum geschlossen sind. Ein alternativer zweiter Betriebszustand, welcher ebenfalls ein Laden bei halber Batteriespannung ermöglicht, jedoch bei abgeschaltetem Betriebsanschluss, kann hier erreicht werden, indem die Schalter S1 und S2 offen sind, die Schaltelemente S3 und S4 geschlossen, das Schaltelement S5 offen und die Schaltelemente S6 und S7 geschlossen sind. Ein dritter Betriebszustand, zum Beispiel für ein Laden bei voller Batteriespannung, bei welchem im vorliegenden Beispiel der Betriebsanschluss zugeschaltet ist und die Energiespeicher 2, 3 in Serie geschaltet sind, kann erreicht werden, indem die Schaltelemente S1 bis S5 geschlossen, die Schaltelemente S6 und S7 jedoch offen sind. Alternativ kann der dritte Betriebszustand, zum Beispiel zum Laden bei voller Batteriespannung, bei einem abgeschalteten Betriebsanschluss eingestellt werden, indem die Schaltelemente S1 und S2 offen, die Schaltelemente S3 bis S5 geschlossen und die Schaltelemente S6 und S7 offen sind. Ein vierter Betriebszustand, zum Beispiel zur allpoligen Abschaltung, kann hier erreicht werden, indem die Schaltelemente S1 bis S4 offen sind. Dabei kommt es auf den Schaltzustand der weiteren Schaltelemente S5 bis S7 dann nicht an.

Fig. 2 zeigt das Schaltbild einer Energiespeichereinrichtung 1 für einen Kraftwagen mit einem ersten Energiespeicher 2 und einem zweiten Energiespeicher 3 mit einem ersten Pluspol 4 des ersten Energiespeichers 2 und einem zweiten Pluspol 5 des zweiten Energiespeichers 3 sowie einem ersten Minuspol 6 des ersten Energiespeichers 2 und einem zweiten Minuspol 7 des zweiten Energiespeichers 3. Des Weiteren weist die Energiespeichereinrichtung 1 noch einen Ladeanschluss 8 zum Laden der Energiespeicher 2, 3 sowie einen Betriebsanschluss 9 zum Versorgen von einem oder mehreren Verbrauchern durch die Energiespeichereinrichtung 1 auf. Überdies umfasst die Energiespeichereinrichtung 1 hier eine Schalteinrichtung, die mehrere, im gezeigten Beispiel sieben Schaltelemente S1 bis S7 umfasst. Mittels dieser Schaltelemente S1 bis S7 sind die Energiespeicher 2, 3 wahlweise in Serie und parallel schaltbar. Bei den Schaltelementen handelt es sich im gezeigten Beispiel um einfache Schalter, welche eine elektrische Verbindung nach dem digitalen Prinzip entweder ein- oder ausschalten können.

Im gezeigten Beispiel ist nun das fünfte Schaltelement S5 dauerhaft mit dem ersten Pluspol 4 und dem zweiten Minuspol 7 gekoppelt. Es könnte auch genauso umgekehrt mit dem ersten Minuspol 6 und dem zweiten Pluspol 5 elektrisch gekoppelt sein, dann würde eine gleiche Wirkung der Schalteinrichtung beziehungsweise der Energiespeichereinrichtung bewirkt, indem auch für die im Folgenden genannten Verschaltungen jeweils Plus- und Minuspole vertauscht werden müssten. Aus Gründen der besseren Lesbarkeit wird hier darauf verzichtet, wesentlich ist, dass das fünfte Schaltelement S5 mit den elektrischen Polen entgegengesetzter Polarität der beiden Energiespeicher 2, 3 gekoppelt ist und mit dem fünften Schaltelement S5 die Energiespeicher 2, 3 unabhängig von den weiteren Schaltelementen S1 bis S4 und S6, S7 beziehungsweise einem Zustand Derselben in Serie schaltbar sind. Selbstverständlich erfolgt dies derart, dass Kurzschlüsse vermieden werden. Dies kann beispielsweise in einer Steuerelektronik der Schalteinrichtung realisiert sein beziehungsweise berücksichtigt werden.

Im gezeigten Beispiel ist nun das erste Schaltelement S1 zwischen dem zweiten Pluspol 5 einerseits und dem Pluspol des Betriebsanschlusses 9, dem dritten Schaltelement S3 und dem sechsten Schaltelement S6 andererseits angeordnet. Analog ist das zweite Schaltelement S2 zwischen dem ersten Minuspol 6 einerseits und dem Minuspol 11 des Betriebsanschlusses 9 sowie dem vierten Schaltelement S4 beziehungsweise dem Minuspol 13 des Ladeanschlusses 8 sowie dem siebten Schaltelement S7 beziehungsweise dem zweiten Minuspol 7 andererseits angeordnet beziehungsweise elektrisch verschaltet.

Das dritte Schaltelement S3 ist hier zwischen dem Pluspol 12 des Ladeanschlusses 8 sowie den restlichen Komponenten, insbesondere dem ersten und dem sechsten Schaltelement S1, S6 sowie den Pluspolen 4, 5 der Energiespeicher 2, 3 und dem Pluspol 10 des Betriebsanschlusses angeordnet. Das vierte Schaltelement S4 ist entsprechend zwischen dem Minuspol 13 des Ladeanschlusses 8 mit den restlichen Komponenten der Energiespeichereinrichtung 1, insbesondere dem zweiten Schaltelement S2 und dem siebten Schaltelement S7 beziehungsweise dem ersten Minuspol 6 und dem zweiten Minuspol 7 sowie dem Minuspol 11 des Betriebsanschlusses angeordnet. Mittels der Schaltelemente S3, S4 kann die allpolige Abschaltung des Ladeanschlusses 8 erreicht werden. Optional können die Schaltelemente S3, S4 auch als Ladeschütze fungieren.

Das sechste Schaltelement S6 ist hier zwischen dem ersten Pluspol 4 einerseits sowie dem Pluspol 10 des Betriebsanschlusses 9 und den Schaltelementen S1 und S3 beziehungsweise dem zweiten Pluspol 5 und dem Pluspol 12 des Ladeanschlusses 8 andererseits angeordnet. Entsprechend ist das Schaltelement S7 elektrisch zwischen dem zweiten Minuspol 7 einerseits und dem Minuspol 7 des Betriebsanschlusses 9 einerseits sowie den Schaltelementen S2 und S4 beziehungsweise ersten elektrischen Minuspol 6 und dem elektrischen Minuspol 13 des Ladeanschlusses 8 andererseits angeordnet. Mittels der Schaltelemente S1, S2, S6 und S7 kann so eine allpolige Abschaltung erreicht werden, insbesondere von dem Betriebsanschluss 9. Zugleich ist durch die Schaltelemente S1, S2, S6 und S7 eine Parallelschaltung der beiden Energiespeicher 2, 3 realisierbar.

Der erste Betriebszustand, zum Beispiel ein normaler Fahrbetrieb mit seriell geschalteten Energiespeichern 2, 3 kann hier realisiert werden, indem die Schaltelemente S1, S2 und S5 geschlossen sind sowie die Schaltelemente S3, S4, S6 und S7 offen. Der zweite Zustand, zum Beispiel zum Laden bei halber Batteriespannung, mit parallel geschalteten Energiespeichern 2, 3, kann hier erreicht werden, indem die Schaltelemente S1 bis S4 geschlossen, das Schaltelement S5 offen und die Schaltelemente S6 und S7 geschlossen sind. Der dritte Betriebszustand, zum Beispiel zum Laden bei voller Batteriespannung, mit in Serie geschalteten Energiespeichern 2, 3 kann erreicht werden, indem die Schaltelemente S1 bis S5 geschlossen, die Schaltelemente S6 und S7 jedoch offen sind. Der vierte Zustand, zum Beispiel zur allpoligen Abschaltung, kann erreicht werden, indem die Schaltelemente S1, S2, S6 und S7 offen sind. Auf den Schaltzustand der Schaltelemente S3, S4 und S5 kommt es in diesem Fall nicht an.

Fig. 3 zeigt das Schaltbild einer Energiespeichereinrichtung 1 für einen Kraftwagen mit einem ersten Energiespeicher 2 und einem zweiten Energiespeicher 3 mit einem ersten Pluspol 4 des ersten Energiespeichers 2 und einem zweiten Pluspol 5 des zweiten Energiespeichers 3 sowie einem ersten Minuspol 6 des ersten Energiespeichers 2 und einem zweiten Minuspol 7 des zweiten Energiespeichers 3. Des Weiteren weist die Energiespeichereinrichtung 1 noch einen Ladeanschluss 8 zum Laden der Energiespeicher 2, 3 sowie einen Betriebsanschluss 9 zum Versorgen von einem oder mehreren Verbrauchern durch die Energiespeichereinrichtung 1 auf. Überdies umfasst die Energiespeichereinrichtung 1 hier eine Schalteinrichtung, die mehrere, im gezeigten Beispiel sieben Schaltelemente S1 bis S7 umfasst. Mittels dieser Schaltelemente S1 bis S7 sind die Energiespeicher 2, 3 wahlweise in Serie und parallel schaltbar. Bei den Schaltelementen handelt es sich im gezeigten Beispiel um einfache Schalter, welche eine elektrische Verbindung nach dem digitalen Prinzip entweder ein- oder ausschalten können.

Im gezeigten Beispiel ist nun das fünfte Schaltelement S5 dauerhaft mit dem ersten Pluspol 4 und dem zweiten Minuspol 7 gekoppelt. Es könnte auch genauso umgekehrt mit dem ersten Minuspol 6 und dem zweiten Pluspol 5 elektrisch gekoppelt sein, dann würde eine gleiche Wirkung der Schalteinrichtung beziehungsweise der Energiespeichereinrichtung bewirkt, indem auch für die im Folgenden genannten Verschaltungen jeweils Plus- und Minuspole vertauscht werden müssten. Aus Gründen der besseren Lesbarkeit wird hier darauf verzichtet, wesentlich ist, dass das fünfte Schaltelement S5 mit den elektrischen Polen entgegengesetzter Polarität der beiden Energiespeicher 2, 3 gekoppelt ist und mit dem fünften Schaltelement S5 die Energiespeicher 2, 3 unabhängig von den weiteren Schaltelementen S1 bis S4 und S6, S7 beziehungsweise einem Zustand Derselben in Serie schaltbar sind. Selbstverständlich erfolgt dies derart, dass Kurzschlüsse vermieden werden. Dies kann beispielsweise in einer Steuerelektronik der Schalteinrichtung realisiert sein beziehungsweise berücksichtigt werden.

Das dritte Schaltelement S3 ist vorliegend zwischen dem Pluspol 12 des Ladeanschlusses 8 einerseits und dem ersten Schaltelement S1 und dem Pluspol 10 des Betriebsanschlusses 9 angeordnet. Das vierte Schaltelement S4 ist entsprechend zwischen dem Minuspol 13 des Ladeanschlusses 8 einerseits und dem Minuspol 11 des Betriebsanschlusses 9 und dem zweiten Schaltelement S2 angeordnet. Die beiden Schaltelemente S3, S4 können so genutzt werden, um den Ladeanschluss 8 von den Energiespeichern 2, 3 zu entkoppeln und diesen so allpolig abzuschalten. Das dritte und das vierte Schaltelement S3, S4 können somit als Ladeschütze fungieren.

Das erste Schaltelement S1 ist vorliegend zwischen dem zweiten Pluspol 5 einerseits und dem Pluspol 10 des Betriebsanschlusses 9 sowie dem dritten Schaltelement S3 beziehungsweise dem Pluspol 12 des Ladeanschlusses 8 andererseits angeordnet. Entsprechend ist das zweite Schaltelement S2 elektrisch zwischen dem ersten Minuspol 6 einerseits und dem Minuspol 11 des Betriebsanschlusses 9 sowie dem vierten Schaltelement S4 beziehungsweise dem Minuspol 13 des Ladenanschlusses 8 andererseits angeordnet. Die beiden Schaltelemente S1 und S2 stellen entsprechend die allpolige Abschaltung der Energiespeicher 2, 3 gegenüber beziehungsweise von dem Betriebsanschluss 9 sicher. Mittels der Schaltelemente S1 und S2 ist die genannte allpolige Abschaltung auch gegenüber dem Ladeanschluss 8 umsetzbar.

Zwischen dem ersten Pluspol 4 und dem zweiten Pluspol 5 ist vorliegend das sechste Schaltelement S6 angeordnet. Entsprechend ist elektrisch zwischen dem ersten Minuspol 6 und dem zweiten Minuspol 7 das siebte Schaltelement S7 angeordnet. Somit ist mittels der Schaltelemente S6 und S7 eine Parallelschaltung der Energiespeicher 2, 3 schaltbar. Da die Schaltelemente S6 und S7 hier nicht für die Freischaltung beziehungsweise allpolige Abschaltung der Energiespeicher 2, 3 zuständig sind beziehungsweise genutzt werden müssen, ist auch eine Ausführung als Halbleiterschaltelement möglich. Zum Beispiel können hier Transistoren oder Dioden verwendet werden.

Der erste Betriebszustand, zum Beispiel der normale Fahrbetrieb, mit seriell geschalteten Energiespeichern 2, 3, kann hier zum Beispiel erreicht werden, indem die Schaltelemente S1, S2 und S5 geschlossen sind, und die Schaltelemente S3, S4 sowie S6 und S7 offen bleiben. Der zweite Betriebszustand, zum Beispiel für ein Laden bei halber Betriebsspannung, mit parallel geschalteten Energiespeichern 2, 3, kann hier erreicht werden, indem die Schaltelemente S1 bis S4 geschlossen sind, das Schaltelement S5 offen und die Schaltelemente S6 und S7 geschlossen sind. Der dritte Zustand, zum Beispiel zum Laden bei voller Batteriespannung, mit seriell geschalteten Energiespeichern 2, 3, kann hier erreicht werden, indem die Schaltelemente S1 bis S5 geschlossen sind, die Schaltelemente S6 und S7 jedoch offen bleiben. Der vierte Zustand, zum Beispiel die allpolige Abschaltung, kann hier erreicht werden, indem die Schaltelemente S1 und S2 offen sind und die restlichen Schaltelemente S3 bis S7 einen beliebigen Zustand zwischen offen oder geschlossen haben.

In allen genannten Ausführungsbeispielen wird somit auf eine elegante Weise unter Nutzung der teilweise bereits aufgrund einschlägiger Sicherheitsvorschriften für Hochvoltbatterien mit Spannungen über 60 Volt vorhandenen Schaltelementen ein flexibles Verschaltungskonzept integriert, welches vier unterschiedliche Betriebszustände erlaubt, und so ein Laden der entsprechenden Energiespeicher 2, 3 an einer Ladeinfrastruktur mit einer im Vergleich zum Fahrbetrieb durch die Energiespeichereinrichtung 1 bereitgestellten Betriebsspannungen unterschreitenden Ladespannung mit wenig Aufwand und geringem Platzbedarf ermöglicht.

### Bezugszeichenliste

- 1: Energiespeichereinrichtung
- 2: Erster Energiespeicher
- 3: Zweiter Energiespeicher
- 4: Erster Pluspol
- 5: Zweiter Pluspol
- 6: Erster Minuspol
- 7: Zweiter Minuspol
- 8: Ladeanschluss
- 9: Betriebsanschluss
- 10: Pluspol
- 11: Minuspol
- 12: Pluspol
- 13: Minuspol
- S1-S7: Erstes bis siebtes Schaltelement

## Patentansprüche

1. Energiespeichereinrichtung (1) für einen Kraftwagen mit
- einem ersten Energiespeicher (2), der einen ersten elektrischen Pluspol (4) und einen ersten elektrischen Minuspol (6) aufweist, und einem zweiten Energiespeicher (3), der einen zweiten elektrischen Pluspol (5) und einen zweiten elektrischen Minuspol (6) aufweist, zum Speichern elektrischer Energie;
- einem Ladeanschluss (8) zum Laden der Energiespeicher (2, 3);
- einem Betriebsanschluss (9) zum Betrieb eines Verbrauchers an der Energiespeichereinrichtung (1) und
- einer Schalteinrichtung, die mehrere Schaltelemente (S1-S7) aufweist und mittels welcher die Energiespeicher (2, 3) wahlweise in Serie oder parallel schaltbar sind; wobei ein fünftes Schaltelement (S5) der Schalteinrichtung dauerhaft mit den elektrischen Polen (4, 5, 6, 7) entgegengesetzter Polarität von den Energiespeichern (2, 3) elektrisch gekoppelt ist und mit dem fünften Schaltelement (S5) die Energiespeicher (2, 3) in Serie schaltbar sind,
**dadurch gekennzeichnet, dass**
- mittels eines ersten Schaltelements (S1) ein Pluspol (10) des Betriebsanschlusses (9) elektrisch von den Pluspolen (4, 5) der Energiespeicher (2, 3) entkoppelbar ist und
- mittels eines zweiten Schaltelements (S2) ein Minuspol (11) des Betriebsanschlusses (9) elektrisch von den Minuspolen (6, 7) der Energiespeicher (2, 3) entkoppelbar ist, und
- mittels eines dritten Schaltelements (S3) ein Pluspol (12) des Ladeanschlusses (8) elektrisch von den Pluspolen (4, 5) der Energiespeicher (2, 3) entkoppelbar ist und
- mittels eines vierten Schaltelements (S4) ein Minuspol (13) des Ladeanschlusses (8) elektrisch von den Minuspolen (6, 7) der Energiespeicher (2, 3) entkoppelbar ist, wobei das dritte und/oder das vierte Schaltelement (S3, S4) als Batterieschütze oder Ladeschütze ausgeführt sind, und
wobei ein sechstes Schaltelement (S6) elektrisch zwischen dem ersten Pluspol (4) des ersten Energiespeichers (2) einerseits und dem ersten Schaltelement (S1) und dem dritten Schaltelement (S3) sowie dem zweiten Pluspol (5) des zweiten Energiespeichers (3) andererseits angeordnet ist und
ein siebtes Schaltelement (S7) elektrisch zwischen dem zweiten Minuspol (7) des zweiten Energiespeichers (3) einerseits und dem ersten Minuspol (6) des ersten Energiespeichers (2) sowie dem zweiten Schaltelement (S2) und vierten Schaltelement (S4) andererseits angeordnet ist,
so dass durch das fünfte, sechste und siebte Schaltelement (S5, S6, S7) eine Parallelschaltung oder Serienschaltung der beiden Energiespeicher (2, 3) ermöglicht ist,
indem die beiden Energiespeicher (2, 3) bei geschlossenem fünften Schaltelement (S5) und geöffneten sechsten und siebten Schaltelement (S6, S7) in Serie geschalten sind und
die beiden Energiespeicher (2, 3) bei geschlossenen sechsten und siebten Schaltelement (S6, S7) und geöffnetem fünften Schaltelement (S5) parallel geschalten sind.

2. Energiespeichereinrichtung (1) nach Anspruch 1,
**dadurch gekennzeichnet, dass**
mittels des mit dem ersten Pluspol (4) des ersten Energiespeichers (2) gekoppelten sechsten Schaltelements (S6) der erste Pluspol (4) des ersten Energiespeichers (2) elektrisch von dem Betriebsanschluss (9) und von dem Ladeanschluss (8) entkoppelbar ist.

3. Energiespeichereinrichtung (1) nach Anspruch 1 oder 2,
**dadurch gekennzeichnet, dass**
mittels des mit dem zweiten Minuspol (7) des zweiten Energiespeichers (3) gekoppelten siebten Schaltelements (S7) der zweite Minuspol (7) des zweiten Energiespeichers (3) elektrisch von dem Betriebsanschluss (9) und auch von dem Ladeanschluss (8) entkoppelbar ist.

4. Energiespeichereinrichtung (1) nach einem der vorhergehenden Ansprüche, **dadurch gekennzeichnet, dass**
das erste Schaltelement (S1) und/oder das zweite Schaltelement (S2) als Batterieschütz ausgeführt ist oder sind.

5. Energiespeichereinrichtung (1) nach einem der vorhergehenden Ansprüche, **dadurch gekennzeichnet, dass**
das fünfte Schaltelement (S5) und/oder das sechste Schaltelement (S6) und/oder das siebte Schaltelement (S7) als Halbleiterschaltelement ausgeführt ist oder sind.

6. Energiespeichereinrichtung (1) für einen Kraftwagen mit
- einem ersten Energiespeicher (2), der einen ersten elektrischen Pluspol (4) und einen ersten elektrischen Minuspol (6) aufweist, und einem zweiten Energiespeicher (3), der einen zweiten elektrischen Pluspol (5) und einen zweiten elektrischen Minuspol (6) aufweist, zum Speichern elektrischer Energie;
- einem Ladeanschluss (8) zum Laden der Energiespeicher (2, 3);
- einem Betriebsanschluss (9) zum Betrieb eines Verbrauchers an der Energiespeichereinrichtung (1) und
- einer Schalteinrichtung, die mehrere Schaltelemente (S1-S7) aufweist und mittels welcher die Energiespeicher (2, 3) wahlweise in Serie oder parallel schaltbar sind; wobei ein fünftes Schaltelement (S5) der Schalteinrichtung dauerhaft mit den elektrischen Polen (4, 5, 6, 7) entgegengesetzter Polarität von den Energiespeichern (2, 3) elektrisch gekoppelt ist und mit dem fünften Schaltelement (S5) die Energiespeicher (2, 3) in Serie schaltbar sind,
**dadurch gekennzeichnet, dass**
- mittels eines ersten Schaltelements (S1) der zweite Pluspol (5) des zweiten Energiespeichers (3) elektrisch von einem Pluspol (10) des Betriebsanschlusses (9) und von einem Pluspol (12) des Ladeanschlusses (8) entkoppelbar ist und
- mittels eines zweiten Schaltelements (S2) der erste Minuspol (6) des ersten Energiespeichers (2) elektrisch von einem Minuspol (11) des Betriebsanschlusses (9) und von einem Minuspol (13) des Ladeanschlusses (8) entkoppelbar ist und
- mittels eines dritten Schaltelements (S3) der Pluspol (12) des Ladeanschlusses (8) elektrisch von den Pluspolen (4, 5) der Energiespeicher (2, 3) entkoppelbar ist und
- mittels eines vierten Schaltelements (S4) der Minuspol (13) des Ladeanschlusses (8) elektrisch von den Minuspolen (6, 7) der Energiespeicher (2, 3) entkoppelbar ist, wobei das dritte und/oder das vierte Schaltelement (S3, S4) als Batterieschütze oder Ladeschütze ausgeführt sind, und
wobei ein sechstes Schaltelement (S6) elektrisch zwischen dem ersten Pluspol (4) des ersten Energiespeichers (2) einerseits und dem ersten Schaltelement (S1) und dem dritten Schaltelement (S3) sowie dem Pluspol (10) des Betriebsanschlusses (9) andererseits angeordnet ist und
ein siebtes Schaltelement (S7) elektrisch zwischen dem zweiten Minuspol (7) des zweiten Energiespeichers (3) einerseits und dem zweiten Schaltelement (S2) und dem vierten Schaltelement (S4) sowie dem Minuspol (11) des Betriebsanschlusses (9) andererseits angeordnet ist,
so dass durch das erste, zweite, fünfte, sechste und siebte Schaltelement (S1, S2, S5, S6, S7) eine Parallelschaltung oder Serienschaltung der beiden Energiespeicher (2, 3) ermöglicht ist,
indem die beiden Energiespeicher (2, 3) bei geschlossenem ersten, zweiten und fünften Schaltelement (S1, S2, S5) und geöffneten sechsten und siebten Schaltelement (S6, S7) in Serie geschalten sind und
die beiden Energiespeicher (2, 3) bei geschlossenen ersten, zweiten, sechsten und siebten Schaltelement (S1, S2, S6, S7) und geöffnetem fünften Schaltelement (S5) parallel geschalten sind.

7. Energiespeichereinrichtung (1) nach Anspruch 6,
**dadurch gekennzeichnet, dass**
mittels des mit dem zweiten Pluspol (5) des zweiten Energiespeichers (3) gekoppelten ersten Schaltelements (S1) der zweite Pluspol (5) des zweiten Energiespeichers (3) elektrisch von dem Betriebsanschluss (9) und von dem Ladeanschluss (8) entkoppelbar ist und
mittels des mit dem ersten Pluspol (4) des ersten Energiespeichers (2) gekoppelten sechsten Schaltelements (S6) der erste Pluspol (4) des ersten Energiespeichers (2) elektrisch von dem Betriebsanschluss (9) und von dem Ladeanschluss (8) entkoppelbar ist.

8. Energiespeichereinrichtung (1) nach Anspruch 6 oder 7,
**dadurch gekennzeichnet, dass**
mittels des mit dem Minuspol (6) des ersten Energiespeichers (2) gekoppelten zweiten Schaltelements (S2) der Minuspol (6) des ersten Energiespeichers (2) elektrisch von dem Betriebsanschluss (9) und von dem Ladeanschluss (8) entkoppelbar ist und
mittels des mit dem zweiten Minuspol (7) des zweiten Energiespeichers (3) gekoppelten siebten Schaltelements (S7) der zweite Minuspol (7) des zweiten Energiespeichers (3) elektrisch von dem Betriebsanschluss (9) und auch von dem Ladeanschluss (8) entkoppelbar ist.

9. Energiespeichereinrichtung (1) nach einem der Ansprüche 6 bis 8,
**dadurch gekennzeichnet, dass**
das erste Schaltelement (S1) und/oder das zweite Schaltelement (S2) und/oder das sechste Schaltelement (S6) und/oder das siebte Schaltelement (S7) als Batterieschütz ausgeführt ist oder sind.

10. Energiespeichereinrichtung (1) nach einem der Ansprüche 6 bis 9
**dadurch gekennzeichnet, dass**
das fünfte Schaltelement (S5) als Halbleiterschaltelement ausgeführt ist.

11. Energiespeichereinrichtung (1) für einen Kraftwagen mit
- einem ersten Energiespeicher (2), der einen ersten elektrischen Pluspol (4) und einen ersten elektrischen Minuspol (6) aufweist, und einem zweiten Energiespeicher (3), der einen zweiten elektrischen Pluspol (5) und einen zweiten elektrischen Minuspol (6) aufweist, zum Speichern elektrischer Energie;
- einem Ladeanschluss (8) zum Laden der Energiespeicher (2, 3);
- einem Betriebsanschluss (9) zum Betrieb eines Verbrauchers an der Energiespeichereinrichtung (1) und
- einer Schalteinrichtung, die mehrere Schaltelemente (S1-S7) aufweist und mittels welcher die Energiespeicher (2, 3) wahlweise in Serie oder parallel schaltbar sind; wobei ein fünftes Schaltelement (S5) der Schalteinrichtung dauerhaft mit den elektrischen Polen (4, 5, 6, 7) entgegengesetzter Polarität von den Energiespeichern (2, 3) elektrisch gekoppelt ist und mit dem fünften Schaltelement (S5) die Energiespeicher (2, 3) in Serie schaltbar sind,
**dadurch gekennzeichnet, dass**
- mittels eines ersten Schaltelements (S1) der erste Pluspol (4) des ersten Energiespeichers (2) und der zweite Pluspol (5) des zweiten Energiespeichers (3) elektrisch von einem Pluspol (10) des Betriebsanschlusses (9) und von einem Pluspol (12) des Ladeanschlusses (8) entkoppelbar ist und
- mittels eines zweiten Schaltelements (S2) der erste Minuspol (6) des ersten Energiespeichers (2) und der zweite Minuspol (7) des zweiten Energiespeichers (3) elektrisch von einem Minuspol (11) des Betriebsanschlusses (9) und von einem Minuspol (13) des Ladeanschlusses (8) entkoppelbar ist und
- mittels eines dritten Schaltelements (S3) der Pluspol (12) des Ladeanschlusses (8) elektrisch von den Pluspolen (4, 5) der Energiespeicher (2, 3) entkoppelbar ist und
- mittels eines vierten Schaltelements (S4) der Minuspol (13) des Ladeanschlusses (8) elektrisch von den Minuspolen (6, 7) der Energiespeicher (2, 3) entkoppelbar ist, wobei das dritte und/oder das vierte Schaltelement (S3, S4) als Batterieschütze oder Ladeschütze ausgeführt sind, und
wobei ein sechstes Schaltelement (S6) elektrisch zwischen dem ersten Pluspol (4) des ersten Energiespeichers (2) einerseits und dem ersten Schaltelement (S1) sowie dem zweiten Pluspol (5) des zweiten Energiespeichers (3) andererseits angeordnet ist und
ein siebtes Schaltelement (S7) elektrisch zwischen dem zweiten Minuspol (7) des zweiten Energiespeichers (3) einerseits und dem ersten Minuspol (6) des ersten Energiespeichers (2) sowie dem zweiten Schaltelement (S2) andererseits angeordnet ist,
so dass durch das fünfte, sechste und siebte Schaltelement (S5, S6, S7) eine Parallelschaltung oder Serienschaltung der beiden Energiespeicher (2, 3) ermöglicht ist,
indem die beiden Energiespeicher (2, 3) bei geschlossenem fünften Schaltelement (S5) und geöffneten sechsten und siebten Schaltelement (S6, S7) in Serie geschalten sind und
die beiden Energiespeicher (2, 3) bei geschlossenen sechsten und siebten Schaltelement (S6, S7) und geöffnetem fünften Schaltelement (S5) parallel geschalten sind.

12. Energiespeichereinrichtung (1) nach Anspruch 11,
**dadurch gekennzeichnet, dass**
mittels des ersten Schaltelements (S1), welches mit dem zweiten Pluspol (5) des zweiten Energiespeichers (3) und über das sechste Schaltelement (S6) mit dem ersten Pluspol (4) des ersten Energiespeichers (2) elektrisch gekoppelt ist, sowohl der zweite Pluspol (5) des zweiten Energiespeichers (3) als auch der erste Pluspol (4) des ersten Energiespeichers (2) elektrisch von dem Betriebsanschluss (9) und auch von dem Ladeanschluss (8) entkoppelbar ist.

13. Energiespeichereinrichtung (1) nach Anspruch 11 oder 12,
**dadurch gekennzeichnet, dass**
mittels des zweiten Schaltelements (S2), welches mit dem ersten Minuspol (6) des ersten Energiespeichers (2) und über das siebte Schaltelement (S7) mit dem zweiten Minuspol (7) des zweiten Energiespeichers (3) elektrisch gekoppelt ist, sowohl der erste Minuspol (6) des ersten Energiespeichers (2) als auch der zweite Minuspol (7) des zweiten Energiespeichers (3) elektrisch von dem Betriebsanschluss (9) und auch von dem Ladeanschluss (8) entkoppelbar ist.

14. Energiespeichereinrichtung (1) nach einem der Ansprüche 11 bis 13,
**dadurch gekennzeichnet, dass**
das erste Schaltelement (S1) und/oder das zweite Schaltelement (S2) als Batterieschütze ausgeführt ist oder sind.

15. Energiespeichereinrichtung (1) nach einem der Ansprüche 11 bis 14,
**dadurch gekennzeichnet, dass**
das fünfte Schaltelement (S5) und/oder das sechste Schaltelement (S6) und/oder das siebte Schaltelement (S7) als Halbleiterschaltelement ausgeführt ist oder sind

## Claims

1. Energy storage device (1) for a motor vehicle, comprising
- a first energy store (2) having a first electric positive pole (4) and a first electric negative pole (6) and a second energy store (3) having a second electric positive pole (5) and a second electric negative pole (6) for storing electric energy;
- a charging connection (8) for charging the energy stores (2, 3);
- an operating connection (9) for the operation of a load at the energy storage device (1); and
- a switching device which comprises a plurality of switching elements (S1-S7) and by means of which the energy stores (2, 3) can optionally be connected in series or in parallel, wherein a fifth switching element (S5) of the switching device is permanently connected electrically to the electric poles (4, 5, 6, 7) of opposite polarity of the energy stores (2, 3) and the energy stores (2, 3) can be connected in series with the fifth switching element (S5),
**characterised in that**
- by means of a first switching element (S1) a positive pole (10) of the operating connection (9) can be electrically decoupled from the positive poles (4, 5) of the energy stores (2, 3), and
- by means of a second switching element (S2) a negative pole (11) of the operating connection (9) can be electrically decoupled from the negative poles (6, 7) of the energy stores (2, 3), and
- by means of a third switching element (S3) a positive pole (12) of the charging connection (8) can be electrically decoupled from the positive poles (4, 5) of the energy stores (2, 3), and
- by means of a fourth switching element (S4) a negative pole (13) of the charging connection (8) can be electrically decoupled from the negative poles (6, 7) of the energy stores (2, 3), wherein the third and/or the fourth switching element (S3, S4) are designed as battery contactors or charging contactors, and wherein a sixth switching element (S6) is electrically located between the first positive pole (4) of the first energy store (2) on the one hand and the first switching element (S1) and the third switching element (S3) as well as the second positive pole (5) of the second energy store (3) on the other hand, and a seventh switching element (S7) is electrically located between the second negative pole (7) of the second energy store (3) on the one hand and the first negative pole (6) of the first energy store (2) as well as the second switching element (S2) and the fourth switching element (S4) on the other hand,
so that the fifth, sixth and seventh switching elements (S4, S6, S7) facilitate a parallel or series connection of the two energy stores (2, 3),
by providing that the two energy stores (2, 3) are connected in series if the fifth switching element (S5) is closed and the sixth and seventh switching elements (S6, S7) are open, and
that the two energy stores (2, 3) are connected in parallel if the sixth and seventh switching elements (S6, S7) are closed and the fifth switching element (S5) is open.

2. Energy storage device (1) according to claim 1,
**characterised in that**
by means of the sixth switching element (S6) coupled to the first positive pole (4) of the first energy store (2), the first positive pole (4) of the first energy store (2) can be electrically decoupled from the operating connection (9) and the charging connection (8).

3. Energy storage device (1) according to claim 1 or 2,
**characterised in that**
by means of the seventh switching element (S7) coupled to the second negative pole (7) of the second energy store (3), the second negative pole (7) of the second energy store (3) can be electrically decoupled from the operating connection (9) and also from the charging connection (8).

4. Energy storage device (1) according to any of the preceding claims, **characterised in that**
the first switching element (S1) and/or the second switching element (S2) is/are designed as battery contactor.

5. Energy storage device (1) according to any of the preceding claims, **characterised in that**
the fifth switching element (S5) and/or the sixth switching element (S6) and/or the seventh switching element (S7) is/are designed as semiconductor switching element.

6. Energy storage device (1) for a motor vehicle, comprising
- a first energy store (2) having a first electric positive pole (4) and a first electric negative pole (6) and a second energy store (3) having a second electric positive pole (5) and a second electric negative pole (6) for storing electric energy;
- a charging connection (8) for charging the energy stores (2, 3);
- an operating connection (9) for the operation of a load at the energy storage device (1); and
- a switching device which comprises a plurality of switching elements (S1-S7) and by means of which the energy stores (2, 3) can optionally be connected in series or in parallel, wherein a fifth switching element (S5) of the switching device is permanently connected electrically to the electric poles (4, 5, 6, 7) of opposite polarity of the energy stores (2, 3) and the energy stores (2, 3) can be connected in series with the fifth switching element (S5),
**characterised in that**
- by means of a first switching element (S1) the second positive pole (5) of the second energy store (3) can be electrically decoupled from a positive pole (10) of the operating connection (9) and from a positive pole (12) of the charging connection (8), and
- by means of a second switching element (S2) the first negative pole (6) of the first energy store (2) can be electrically decoupled from a negative pole (11) of the operating connection (9) and from a negative pole (13) of the charging connection (8), and
- by means of a third switching element (S3) the positive pole (12) of the charging connection (8) can be electrically decoupled from the positive poles (4, 5) of the energy stores (2, 3), and
- by means of a fourth switching element (S4) the negative pole (13) of the charging connection (8) can be electrically decoupled from the negative poles (6, 7) of the energy stores (2, 3), wherein the third and/or the fourth switching element (S3, S4) is/are designed as battery contactors or charging contactors, and wherein a sixth switching element (S6) is electrically located between the first positive pole (4) of the first energy store (2) on the one hand and the first switching element (S1) and the third switching element (S3) as well as the positive pole (10) of the operating connection (9) on the other hand, and a seventh switching element (S7) is electrically located between the second negative pole (7) of the second energy store (3) on the one hand and the second switching element (S2) and the fourth switching element (S4) as well as the negative pole (11) of the operating connection (9) on the other hand,
so that a parallel connection or series connection of the two energy stores (2, 3) is facilitated by the first, second, fifth, sixth and seventh switching element (S1, S2, S5, S6, S7),
by providing that the two energy stores (2, 3) are connected in series if the first, second and fifth switching elements (S1, S2, S5) are closed and the sixth and seventh switching elements (S6, S7) are open, and
that the two energy stores (2, 3) are connected in parallel if the first, second, sixth and seventh switching elements (S1, S2, S6, S7) are closed and the fifth switching element (S5) is open.

7. Energy storage device (1) according to claim 6,
**characterised in that**
by means of the first switching element (S1) coupled to the second positive pole (5) of the second energy store (3), the second positive pole (5) of the second energy store (3) can be electrically decoupled from the operating connection (9) and the charging connection (8), and
by means of the sixth switching element (S6) coupled to the first positive pole (4) of the first energy store (2), the first positive pole (4) of the first energy store (2) can be electrically decoupled from the operating connection (9) and the charging connection (8).

8. Energy storage device (1) according to claim 6 or 7,
**characterised in that**
by means of the second switching element (S2) coupled to the negative pole (6) of the first energy store (2), the negative pole (6) of the first energy store (2) can be electrically decoupled from operating connection (9) and the charging connection (8), and
by means of the seventh switching element (S7) coupled to the second negative pole (7) of the second energy store (3), the second negative pole (7) of the second energy store (3) can be electrically decoupled from operating connection (9) and also from the charging connection (8).

9. Energy storage device (1) according to any of claims 6 to 8,
**characterised in that**
the first switching element (S1) and/or the second switching element (S2) and/or the sixth switching element (S6) and/or the seventh switching element (S7) is/are designed as battery contactor.

10. Energy storage device (1) according to any of claims 6 to 9,
**characterised in that**
the fifth switching element (S5) is designed as semiconductor switching element.

11. Energy storage device (1) for a motor vehicle, comprising
- a first energy store (2) having a first electric positive pole (4) and a first electric negative pole (6) and a second energy store (3) having a second electric positive pole (5) and a second electric negative pole (6) for storing electric energy;
- a charging connection (8) for charging the energy stores (2, 3);
- an operating connection (9) for the operation of a load at the energy storage device (1); and
- a switching device which comprises a plurality of switching elements (S1-S7) and by means of which the energy stores (2, 3) can optionally be connected in series or in parallel, wherein a fifth switching element (S5) of the switching device is permanently connected electrically to the electric poles (4, 5, 6, 7) of opposite polarity of the energy stores (2, 3) and the energy stores (2, 3) can be connected in series with the fifth switching element (S5),
**characterised in that**
- by means of a first switching element (S1) the first positive pole (4) of the first energy store (2) and the second positive pole (5) of the second energy store (3) can be electrically decoupled from a positive pole (10) of the operating connection (9) and from a positive pole (12) of the charging connection (8), and
- by means of a second switching element (S2) the first negative pole (6) of the first energy store (2) and the second negative pole (7) of the second energy store (3) can be electrically decoupled from a negative pole (11) of the operating connection (9) and from a negative pole (13) of the charging connection (8), and
- by means of a third switching element (S3) the positive pole (12) of the charging connection (8) can be electrically decoupled from the positive poles (4, 5) of the energy stores (2, 3), and
- by means of a fourth switching element (S4) the negative pole (13) of the charging connection (8) can be electrically decoupled from the negative poles (6, 7) of the energy stores (2, 3), wherein the third and/or the fourth switching element (S3, S4) is/are designed as battery contactors or charging contactors, and wherein a sixth switching element (S6) is electrically located between the first positive pole (4) of the first energy store (2) on the one hand and the second positive pole (5) of the second energy store (3) on the other hand, and a seventh switching element (S7) is electrically located between the second negative pole (7) of the second energy store (3) on the one hand and the first negative pole (6) of the first energy store (2) as well as the second switching element (S2) on the other hand,
so that a parallel connection or series connection of the two energy stores (2, 3) is facilitated by the fifth, sixth and seventh switching elements (S5, S6, S7),
by providing that the two energy stores (2, 3) are connected in series if the fifth switching element (S5) is closed and the sixth and the seventh switching elements S6, S7) are open, and
that the two energy stores (2, 3) are connected in parallel if the sixth and seventh switching elements (S6, S7) are closed and the fifth switching element (S5) is open.

12. Energy storage device (1) according to claim 11,
**characterised in that**
by means of the first switching element (S1) electrically coupled to the second positive pole (5) of the second energy store (3) and, by way of the sixth switching element (S6), to the first positive pole (4) of the first energy store (2), both the second positive pole (5) of the second energy store (3) and the first positive pole (4) of the first energy store (2) can be electrically decoupled from the operating connection (9) and also from the charging connection (8).

13. Energy storage device (1) according to claim 11 or 12,
**characterised in that**
by means of the second switching element (S2) electrically coupled to the first negative pole (6) of the first energy store (2) and, by way of the seventh switching element (S7), to the second negative pole (7) of the second energy store (3), both the first negative pole (6) of the first energy store (2) and the second negative pole (7) of the second energy store (3) can be electrically decoupled from the operating connection (9) and also from the charging connection (8).

14. Energy storage device (1) according to any of claims 11 to 13,
**characterised in that**
the first switching element (S1) and/or the second switching element (S2) is/are designed as battery contactors.

15. Energy storage device (1) according to any of claims 11 to 14,
**characterised in that**
the fifth switching element (S5) and/or the sixth switching element (S6) and/or the seventh switching element (S7) is/are designed as semiconductor switching element.

## Revendications

1. Dispositif accumulateur d'énergie (1) pour un véhicule à moteur comprenant :
- un premier accumulateur d'énergie (2), qui présente une première borne électrique positive (4) et une première borne électrique négative (6) et un second accumulateur d'énergie (3), qui présente une seconde borne électrique positive (5) et une seconde borne électrique négative (6) pour stocker l'énergie électrique ;
- un raccordement de recharge (8) pour recharger les accumulateurs d'énergie (2, 3) ;
- un raccordement de fonctionnement (9) pour faire fonctionner un consommateur sur le dispositif accumulateur d'énergie (1) et
- un dispositif de commutation qui présente plusieurs éléments de commutation (S1-S7) et au moyen duquel les accumulateurs d'énergie (2, 3) peuvent être montés au choix en série ou en parallèle ;
un cinquième élément de commutation (S5) du dispositif de commutation étant couplé électriquement en continu aux bornes électriques (4, 5, 6, 7) de polarité opposée des accumulateurs d'énergie (2, 3) et le cinquième élément de commutation (S5) permettant de monter en série les accumulateurs d'énergie (2, 3),
**caractérisé en ce qu'**
- au moyen d'un premier élément de commutation (S1) une borne positive (10) du raccordement de fonctionnement (9) peut être découplée électriquement des bornes positives (4, 5) de l'accumulateur d'énergie (2, 3) et
- au moyen d'un deuxième élément de commutation (S2) une borne négative (11) du raccordement de fonctionnement (9) peut être découplée électriquement des bornes négatives (6, 7) des accumulateurs d'énergie (2, 3), et
- au moyen d'un troisième élément de commutation (S3) une borne positive (12) du raccordement de recharge (8) peut être découplée électriquement des bornes positive (4, 5) de l'accumulateur d'énergie (2, 3) et
- au moyen d'un quatrième élément de commutation (S4) une borne négative du raccordement de recharge (8) peut être découplée électriquement des bornes négatives (6, 7) des accumulateurs d'énergie (2, 3), le troisième et/ou le quatrième élément(s) de commutation (S3, S4) étant conçu(s) sous la forme de protection de batterie ou de protection de recharge, et
- un sixième élément de commutation (S6) étant disposé électriquement entre la première borne positive (4) du premier accumulateur d'énergie (2) d'une part et le premier élément de commutation (S1) et le troisième élément de commutation (S3) ainsi que la deuxième borne positive (5) du second accumulateur d'énergie (3) d'autre part et
- un septième élément de commutation (S7) étant disposé électriquement entre le deuxième borne négative (7) du second accumulateur d'énergie (3) d'une part et la première borne négative (6) du premier accumulateur d'énergie (2) ainsi que le deuxième élément de commutation (S2) et le quatrième élément de commutation (S4) d'autre part,
de sorte que le cinquième, sixième et septième élément de commutation (S5, S6, S7) permettent un montage en parallèle ou un montage en série des deux accumulateurs d'énergie (2, 3),
les deux accumulateurs d'énergie (2, 3) étant ainsi montés en série lorsque le cinquième élément de commutation fermé (S5) et le septième élément de commutation (S6, S7) sont fermés et
les deux accumulateurs d'énergie (2, 3) étant ainsi montés parallèle lorsque le sixième et le septième élément de commutation (S6, S7) sont fermés et le cinquième élément de commutation (S5) est ouvert.

2. Dispositif accumulateur d'énergie (1) selon la revendication 1, **caractérisé en ce qu'**au moins du sixième élément de commutation (S6) couplé à la première borne positive (4) du premier accumulateur d'énergie (2), la première borne positive (4) du premier accumulateur d'énergie (2) peut être découplée électriquement du raccordement de fonctionnement (9) et du raccordement de recharge (8).

3. Dispositif accumulateur d'énergie (1) selon la revendication 1 ou la revendication 2, **caractérisé en ce qu'**au moyen du septième élément de commutation (S7) couplé à la seconde borne négative (7) du second accumulateur d'énergie (3), la seconde borne négative (7) du second accumulateur d'énergie (3) peut être découplée électriquement du raccordement de fonctionnement (9) et également du raccordement de recharge (8).

4. Dispositif accumulateur d'énergie (1) selon l'une quelconque des revendications précédentes, **caractérisé en ce que** le premier élément de commutation (S1) et/ou le deuxième élément de commutation (S2) est/sont conçu(s) sous la forme de protection de batterie.

5. Dispositif accumulateur d'énergie (1) selon l'une quelconque des revendications précédentes, **caractérisé en ce que** le cinquième élément de commutation (S5) et/ou le sixième élément de commutation (S6) et/ou le septième élément de commutation (S7) sont conçus sous la forme d'un élément de commutation semi-conducteur.

6. Dispositif accumulateur d'énergie (1) pour un véhicule à moteur comprenant
- un premier accumulateur d'énergie (2) qui présente une première borne positive électrique (4) et une première borne négative électrique (6), et un second accumulateur d'énergie (3) qui présente une seconde borne positive électrique (5) et une seconde borne négative électrique (6), pour stocker l'énergie électrique ;
- un raccordement de recharge (8) pour charger les accumulateurs d'énergie (2, 3) ;
- un raccordement de fonctionnement (9) pour faire fonctionner un consommateur sur le dispositif accumulateur d'énergie (1) et
- un dispositif de commutation qui présente plusieurs éléments de commutation (S1-S7) et au moyen duquel un cinquième élément de commutation (S5) du dispositif accumulateur est couplé électriquement en continu avec les bornes électriques (4, 5, 6, 7) et avec le cinquième élément de commutation (S5) les accumulateurs d'énergie (2, 3) sont montés en série, **caractérisé en ce qu'**
- au moyen d'un deuxième élément de commutation (S2) la première borne négative (6) du premier accumulateur d'énergie (2) est découplée électriquement de la borne négative (11° du raccordement de fonctionnement (9) et de la borne négative (13) du raccordement de recharge (8) et
- au moyen d'un troisième élément de commutation (S3) la borne positive (12) du raccordement de recharge (8) est découplée électriquement des bornes positives (4, 5) des accumulateurs d'énergie (2, 3) et
- au moyen d'un quatrième élément de commutation (S4) la borne négative (13) du raccordement de recharge (8) est découplée électriquement des bornes négatives (6, 7) des accumulateurs d'énergie (2, 3), le troisième et/ou le quatrième élément de commutation (S3, S4) étant conçus sous la forme de protection de batterie ou de protection de charge, et
- un sixième élément de commutation (S6) étant disposé électriquement entre la première borne positive (4) du premier accumulateur d'énergie (2) d'une part et le premier élément de commutation (S1) et le troisième élément de commutation (S3) ainsi que la borne positive (10) du raccordement de fonctionnement (9) d'autre part et
- un septième élément de commutation (S7) étant disposé électriquement entre le second borne négative (7) du second accumulateur d'énergie (3) d'une part et le second élément de commutation (S2) et le quatrième élément de commutation (S4) ainsi que la borne négative (11) du raccordement de fonctionnement (8) d'autre part,
- de sorte que le premier, le deuxième, le cinquième, le sixième et le septième élément de commutation (S1, S2, S5, S6, S7) permettent un montage en parallèle ou un montage en série des deux accumulateurs d'énergie (2, 3),
les deux accumulateurs d'énergie (2, 3) étant ainsi montés en série lorsque le premier, le deuxième et le cinquième élément de commutation (S1, S2, S5) sont fermés et lorsque le sixième, le septième élément de commutation (S6, S7) sont ouverts et
les deux accumulateurs d'énergie (2, 3) étant ainsi montés en parallèle lorsque le premier, le deuxième, le sixième et le septième élément de commutation (S1, S2, S6, S7) sont fermés et que le cinquième élément de commutation (S5) est ouvert.

7. Dispositif accumulateur d'énergie (1) selon la revendication 6, **caractérisé en ce qu'**au moyen du premier élément de commutation (S1) couplé à la seconde borne positive (5) du second accumulateur d'énergie (3) la seconde borne positive (5) du second accumulateur (3) peut être découplée électriquement du raccordement de fonctionnement (9) et du raccordement de recharge (8) et
au moyen du sixième élément de commutation (S6) couplé à la première borne positive (4) du premier accumulateur (2), la première borne positive (4) du premier accumulateur d'énergie (2) peut être découplée électriquement du raccordement de fonctionnement (9) et du raccordement de recharge (8).

8. Dispositif accumulateur d'énergie (1) selon la revendication 6 ou la revendication 7, **caractérisé en ce qu'**
au moyen du deuxième élément de commutation (S2) couplé à la borne négative (6) du premier accumulateur d'énergie (2), la borne négative (6) du premier accumulateur d'énergie (2) peut être découplée électriquement du raccordement de fonctionnement (9) et du raccordement de recharge (8) et au moyen du septième élément de commutation (S7) couplé à la seconde borne négative (7) du second accumulateur d'énergie (3), la seconde borne négative (7) du second accumulateur d'énergie (3) peut être découplée électriquement du raccordement de fonctionnement (9) et également du raccordement de recharge (8).

9. Dispositif accumulateur d'énergie (1) selon l'une quelconque des revendications 6 à 9, **caractérisé en ce que** le premier élément de commutation (S1) et/ou le deuxième élément de commutation (S2) et/ou le sixième élément de commutation (S6) et/ou le septième élément de commutation (S7) est/sont conçus sous la forme de protection de batterie.

10. Dispositif accumulateur d'énergie (1) selon l'une quelconque des revendications 6 à 9, **caractérisé en ce que** le cinquième élément de commutation (S5) étant conçu sous la forme d'élément de commutateur semi-conducteur.

11. Dispositif accumulateur d'énergie (1) pour un véhicule à moteur comprenant
- un premier accumulateur d'énergie (2), qui présente une première borne positive (4) électrique et une première borne négative (6) électrique, et un second accumulateur d'énergie (3) qui présente un second borne positive (5) électrique et un second borne négative (6) électrique pour stocker I »énergie électrique ;
- un raccordement de recharge (8) pour charger l'accumulateur d'énergie (2, 3) ;
- un raccordement de fonctionnement (9) pour faire fonctionner un consommateur sur le dispositif accumulateur d'énergie (1) et
- un dispositif de commutation qui présente plusieurs éléments de commutation (S1-S7) et qui permettent de monter au choix en série ou en parallèle les accumulateurs d'énergie (2, 3) ;
un cinquième élément de commutation (S5) du dispositif de commutation étant couplé électriquement en continu aux bornes électriques (4, 5, 6, 7) de polarité opposée des accumulateurs d'énergie (2, 3) et les accumulateurs d'énergie (2, 3) pouvant être montés en série avec le cinquième élément de commutation (S5), **caractérisé en ce que**
- au moyen d'un premier élément de commutation (S1) la première borne positive (4) du premier accumulateur d'énergie (2) et la seconde borne positive (5) du second accumulateur d'énergie (3) peuvent être découplées électriquement d'une borne positive (10) du raccordement de fonctionnement (9) et d'une borne positive (12) du raccordement de recharge (8) et
- au moyen d'un deuxième élément de commutation (S2) la première borne négative (6) du premier accumulateur d'énergie (2) et la seconde borne négative (7) du second accumulateur d'énergie (3) peuvent être découplées électriquement d'une borne négative (11) du raccordement de fonctionnement (9) et d'une borne négative (13) du raccordement de recharge (8) et
- au moyen d'un troisième élément de commutation (S3) la borne négative (12) du raccordement de recharge (8) peut être découplée électriquement des bornes positives (4, 5) des accumulateurs d'énergie (2, 3)
et
- au moyen d'un quatrième élément de commutation (S4) la borne négative (13) du raccordement de recharge (8) peut être découplée électriquement des bornes négatives (6, 7) des accumulateurs d'énergie (2, 3), le troisième et/ou le quatrième élément de commutation (S3, S4) étant conçus sous la forme de protection de batterie ou de protection de charge, et
- un sixième élément de commutation (S6) étant disposé électriquement entre la première borne positive (4) du premier accumulateur d'énergie (2) d'une part et le premier élément de commutation (S1) ainsi que la seconde borne positive (5) du second accumulateur d'énergie (3) d'autre part et
- un septième élément de commutation (S7) étant disposé électriquement entre la seconde borne négative (7) du second accumulateur d'énergie (3) d'une part et la première borne négative (6) du premier accumulateur d'énergie (2) ainsi que le deuxième élément de commutation (S2) d'autre part,
- de sorte que le cinquième, sixième et septième élément de commutation (S5, S6, S7) permettent un montage en parallèle ou un montage en série des deux accumulateurs d'énergie (2, 3),
- de ce fait les deux accumulateurs d'énergie (2, 3) lorsque le cinquième élément de commutation (S5) est fermé et que le sixième et le septième élément de commutation sont ouverts, sont montés en série et
- les deux accumulateurs d'énergie (2, 3) sont montés en parallèles lorsque le sixième et le septième élément de commutation (S6, S7) sont fermés et que le cinquième élément de commutation (S5) est ouvert.

12. Dispositif accumulateur d'énergie (1) selon la revendication 11, **caractérisé en ce qu'**au moyen du premier élément de commutation (S1) qui peut être couplé électriquement à la seconde borne positive (5) du second accumulateur d'énergie (3) et par le sixième élément de commutation (S6) à la première borne positive (4) du premier accumulateur d'énergie (2), tant la seconde borne positive (5) du second accumulateur d'énergie (3) que la première borne positive (4) du premier accumulateur d'énergie (2) peuvent être découplées électriquement du raccordement de fonctionnement (9) et également du raccordement de recharge (8).

13. Dispositif accumulateur d'énergie (1) selon la revendication 11 ou la revendication 12, **caractérisé en ce qu'**au moyen du deuxième élément de commutation (S2) qui peut être couplé électriquement à la première borne négative (6) du premier accumulateur d'énergie (2) et par le septième élément de commutation (S7) à la seconde borne négative (7) du second accumulateur d'énergie (3),
tant la première borne négative (6) du premier accumulateur d'énergie (2) que la seconde borne négative (7) du second accumulateur d'énergie (3) peuvent être découplées électriquement du raccordement de fonctionnement (9) et du raccordement de recharge (8).

14. Dispositif accumulateur d'énergie (1) selon l'une quelconque des revendications 11 à 13, **caractérisé en ce que** le premier élément de commutation (S1) et/ou le deuxième élément de commutation (S2) étant conçus sous la forme de protection de batterie.

15. Dispositif accumulateur d'énergie (1) selon l'une quelconque des revendications 11 à 14, **caractérisé en ce que** le cinquième élément de commutation (S5) et/ou le sixième élément de commutation (S6) et/ou le septième élément de commutation (S7) est/sont conçus sous la forme d'élément de commutation à semi-conducteur.
